# EUROPEAN PATENT APPLICATION

(11) **EP 2 291 037 A2**
(43) Date of publication of application: **02.03.2011**
(21) Application number: 10173832.6
(22) Date of filing: 24.08.2010
(51) Int. Cl.: H04W 52/12, H04W 72/04

(54) **Method and apparatus for improved VAMOS transmission**

(30) Priority: 24.08.2009 US 236434 P; 26.02.2010 US 308735 P
(71) Applicant: Marvell World Trade Ltd., St. Michael 14027 (BB)
(72) Inventor: Spencer, Paul S., Modiin (IL)
(74) Representative: Grünecker, Kinkeldey, Stockmair & Schwanhäusser Anwaltssozietät

(57) **Abstract**

A method includes assigning a communication channel for simultaneous transmission to at least first and second mobile communication terminals (28) using a Time-Division Multiplexing (TDM) communication protocol. Upon determining that data is to be transmitted over the communication channel to both the first and the second mobile communication terminals, the data is transmitted at a first power level that is defined for transmission to the first mobile communication terminal as part of the simultaneous transmission. Upon determining that the data is to be transmitted over the communication channel only to the first mobile communication terminal, the data is transmitted at a second power level that is defined for transmission only to the first mobile communication terminal and is lower than the first power level.

## Description

### CROSS-REFERENCE TO RELATED APPLICATIONS

This application claims the benefit of U.S. Provisional Patent Application 61/236,434, filed August 24, 2009, and U.S. Provisional Patent Application 61/308,735, filed February 26, 2010, whose disclosures are incorporated herein by reference.

### FIELD OF THE DISCLOSURE

The present disclosure relates generally to communication systems, and particularly to methods and systems for assigning communication channels to users.

### BACKGROUND

In some communication networks, signals are transmitted simultaneously to multiple users over the same radio resource. For example, some proposed Global System for Mobile communications (GSM) EDGE Radio Access Network (GERAN) configurations support a feature that is referred to as Multi-User Reusing-One-Slot (MUROS), also known as Voice services over Adaptive Multi-user channels on One Slot (VAMOS). MUROS/VAMOS defines a scheme in which two users are multiplexed in the same time slot.

MUROS is described, for example, by the Third Generation Partnership Project (3GPP) in "Technical Specification Group GERAN; Circuit Switched Voice Capacity Evolution for GSM/EDGE Radio Access Network (GERAN); (Release 8)," TR 45.914, version 8.1.0, May, 2009. Assignment of users to MUROS/VAMOS channels is described in "Technical Specification Group GSM/EDGE Radio Access Network; Multiplexing and multiple access on the radio path (Release 9)," TS 45.002, version 9.1.0, September, 2009.

The description above is presented as a general overview of related art in this field and should not be construed as an admission that any of the information it contains constitutes prior art against the present patent application.

### SUMMARY

An embodiment that is described herein provides a method, in which a communication channel is assigned for simultaneous transmission to at least first and second mobile communication terminals using a Time-Division Multiplexing (TDM) communication protocol (e.g., a GSM protocol). Upon determining that data is to be transmitted over the communication channel to both the first and the second mobile communication terminals, the data is transmitted at a first power level that is defined for transmission to the first mobile communication terminal as part of the simultaneous transmission. Upon determining that the data is to be transmitted over the communication channel only to the first mobile communication terminal, the data is transmitted at a second power level that is defined for transmission only to the first mobile communication terminal and is lower than the first power level.

In an embodiment, the method includes predefining the first and second power levels. In a disclosed embodiment, assigning the communication channel includes assigning first and second orthogonal quadrature sub-channels for transmission to the first and second mobile communication terminals, respectively, and predefining the first power level includes setting a projection of the simultaneous transmission on the first quadrature sub-channel to have the first power level.

In another embodiment, transmitting the data at the first power level includes modulating the data for the first and the second mobile communication terminals onto respective first and second quadrature components of a Quadrature Phase Shift Keying (QPSK) signal, and transmitting the data at the second power level includes modulating the data onto the first quadrature sub-channel using Gaussian Minimum Shift Keying (GMSK). In yet another embodiment, predefining the first power level includes setting the first power level so as to meet a target error rate at the first mobile communication terminal during the simultaneous transmission, and predefining the second power level includes setting the second power level so as to meet the target error rate at the first mobile communication terminal during transmission only to the first mobile communication terminal.

In some embodiments, transmission to the second mobile communication terminal is carried out in a Discontinuous Transmission (DTX) mode, and determining that the data is to be transmitted only to the first mobile communication terminal includes determining a time period of the DTX mode in which there is no active speech for transmission to the second mobile communication terminal. In an embodiment, determining that the data is to be transmitted only to the first mobile communication terminal includes determining that the communication channel is currently allocated only to the first mobile communication terminal.

There is additionally provided, in accordance with an embodiment that is described herein, apparatus including a transmitter, a resource scheduler and a controller. The transmitter is configured to transmit signals using a Time-Division Multiplexing (TDM) communication protocol to at least first and second mobile communication terminals. The resource scheduler is configured to assign a communication channel for simultaneous transmission to at least the first and second mobile communication terminals. The controller is configured to cause the transmitter to transmit data at a first power level that is defined for transmission to the first mobile communication terminal as part of the simultaneous transmission, when the data is to be transmitted over the communication channel to both the first and the second mobile communication terminals. When the data is to be transmitted over the communication channel only to the first mobile communication terminal, the controller is configured to cause the transmitter to transmit the data at a second power level, which is defined for transmission only to the first mobile communication terminal and is lower than the first power level.

There is also provided, in accordance with an embodiment that is described herein, a method in which a communication channel, including a sequence of time slots, is allocated for transmissions to at least first, second and third mobile communication terminals, such that each time slot carries a respective transmission addressed to up to two of the mobile communication terminals. A slot pairing schedule is predefined, which assigns a first subset of the time slots for the transmissions to the first and second mobile communication terminals and assigns a second subset of the time slots for the transmissions to the first and third mobile communication terminals. Signals are transmitted to at least the first, second and third mobile communication terminals in accordance with the predefined slot pairing schedule.

In some embodiments, transmitting the signals includes transmitting only to the second mobile communication terminal during at least a first time slot in the slot pairing schedule, and only to the third mobile communication terminal during at least a second time slot in the slot pairing schedule. In an embodiment, transmitting the signals includes transmitting to the first mobile communication terminal in a Discontinuous Transmission (DTX) mode in which at least the first and second time slots are assigned to the first mobile communication terminal but do not carry speech signals for the first mobile communication terminal. In a disclosed embodiment, allocating the communication channel includes assigning no communication terminal other than the second mobile communication terminal to the first time slot, and assigning no communication terminal other than the third mobile communication terminal to the second time slot.

There is further provided, in accordance with an embodiment that is described herein, apparatus that includes a transmitter and a processor. The transmitter is configured to transmit signals to at least first, second and third mobile communication terminals. The processor is configured to allocate a communication channel, including a sequence of time slots, for transmissions to at least the first, second and third mobile communication terminals, such that each time slot carries a respective transmission addressed to up to two of the mobile communication terminals, to predefine a slot pairing schedule, which assigns a first subset of the time slots for the transmissions to the first and second mobile communication terminals, and which assigns a second subset of the time slots for the transmissions to the first and third mobile communication terminals, and to cause the transmitter to transmit signals to at least the first, second and third mobile communication terminals in accordance with the predefined slot pairing schedule.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a wireless communication network that uses VAMOS, in accordance with an embodiment that is described herein;

Figs. 2 and 3 are flow charts that schematically illustrate methods for downlink transmission over a VAMOS channel, in accordance with embodiments that are described herein; and

Figs. 4A-4B and 5-6 are diagrams that schematically illustrate slot pairing schedules, in accordance with embodiments that are described herein.

### DETAILED DESCRIPTION OF EMBODIMENTS

In some communication systems, a Base Station (BS) transmits signals to two or more Mobile Stations (MSs) over a single shared communication channel. An example of such a system is the Global System for Mobile communications (GSM) EDGE Radio Access Network (GERAN) network, which supports Voice services over Adaptive Multi-user channels on One Slot (VAMOS). In VAMOS systems, the BS transmits signals to two MSs simultaneously on the same communication channel by transmitting two respective quadrature sub-channels, e.g., using Alpha Quadrature Phase Shift Keying (α-QPSK) modulation. The communication channel typically comprises a sequence of time slots that are transmitted on a given Radio Frequency (RF) channel.

In some scenarios, however, the BS has data to transmit to only one MS over a given physical communication channel. (A definition of a physical channel is given, for example, in section 5 of the TS 45.002 specification, cited above.) For example, one of the MSs assigned to the communication channel may operate in a Discontinuous Transmission (DTX) mode in order to reduce interference. In this mode, the BS transmits encoded speech to the MS only when active speech is present, and only minimal signaling is transmitted to the MS during periods of low speech activity. When using DTX, the BS occasionally transmits signals only to a single MS, even though two MSs are assigned to the communication channel. As another example, the BS may transmit to a single MS when no other MS is assigned to the same communication channel, either temporarily or permanently.

In an embodiment, the BS transmits simultaneously to two MSs using a two-bits-per-symbol modulation scheme such as α-QPSK. However, when transmitting to a single MS, the BS typically uses a one-bit-per-symbol modulation scheme such as Gaussian Minimum Shift Keying (GMSK). (In alternative embodiments, other modulation schemes may be used.) The performance of one-bit-per-symbol modulation is often considerably higher than the performance of modulation schemes that use two or more bits per symbol, in terms of the Signal-to-Noise (S/N) or Signal-to-Interference (C/I) ratio that is required to meet a certain error probability. Therefore, when the BS transmits only to a single MS over a shared communication channel, this MS enjoys reception conditions that are often considerably better than those required to meet the specified reception performance.

Embodiments that are described herein provide methods and systems that exploit the improved reception conditions during transmission to a single MS in order to improve the overall system performance. In some embodiments, the BS transmits to a given MS at different transmit power levels, depending on whether the transmission to the MS is part of a simultaneous transmission (together with transmission to another MS simultaneously on the same communication channel) or not. The BS sets a first power level for transmission to the MS as part of the simultaneous transmission (e.g., sets the transmit power level of the quadrature sub-channel that carries the transmission to the MS in question). The BS sets a second transmit power level, lower than the first power level, for transmission only to the given MS (e.g., using GMSK).

Since the modulation used for transmitting only to the given (single) MS is typically more robust than the modulation used for simultaneous transmission, the second (lower) transmit power level is sufficient for meeting the specified reception performance. Reducing the transmit power level when transmitting only to the given MS reduces the interference caused by the BS to neighboring BSs and MSs. In a typical implementation, the BS sets both transmit power levels so as to meet the same reception performance requirement (e.g., a maximum frame error rate of 1%).

In some embodiments that are described herein, the BS assigns up to four MSs that use half-rate speech coding to a single shared physical communication channel. The communication channel comprises a sequence of time slots. Each time slot is used for transmission to one or two of the MSs using one-bit-per-symbol or two-bits-per-symbol modulation, as explained above. Because of the half-rate speech coding, each MS is assigned half of the time slots of the communication channel, on average. In these configurations too, there may be occasions in which the BS transmits only to a single MS on a given time slot. For example, when one of the four MSs operates in DTX and has no active speech to receive, in an embodiment, the MS that is paired with this MS on the same time slot receives one-bit-per-symbol signals and typically has considerably improved reception performance.

In some embodiments, the BS pairs the MSs onto the communication channel in accordance with a predefined pairing schedule, which specifies which MSs are to be paired in each time slot. In particular, the pairing schedule alternates the pairing over time. In other words, when pairing at least first, second and third MSs onto the communication channel, the pairing schedule specifies that the first MS is paired with the second MS in at least one time slot, and with the third MS in at least one other time slot.

The alternating pairing helps to distribute the improved performance provided by the one-bit-per-symbol modulation among the MSs, rather than have a specific MS enjoy this benefit. Distributing the performance improvement among multiple MSs improves the performance of the worst-performing MS, with little or no degradation in the performance of the other MSs.

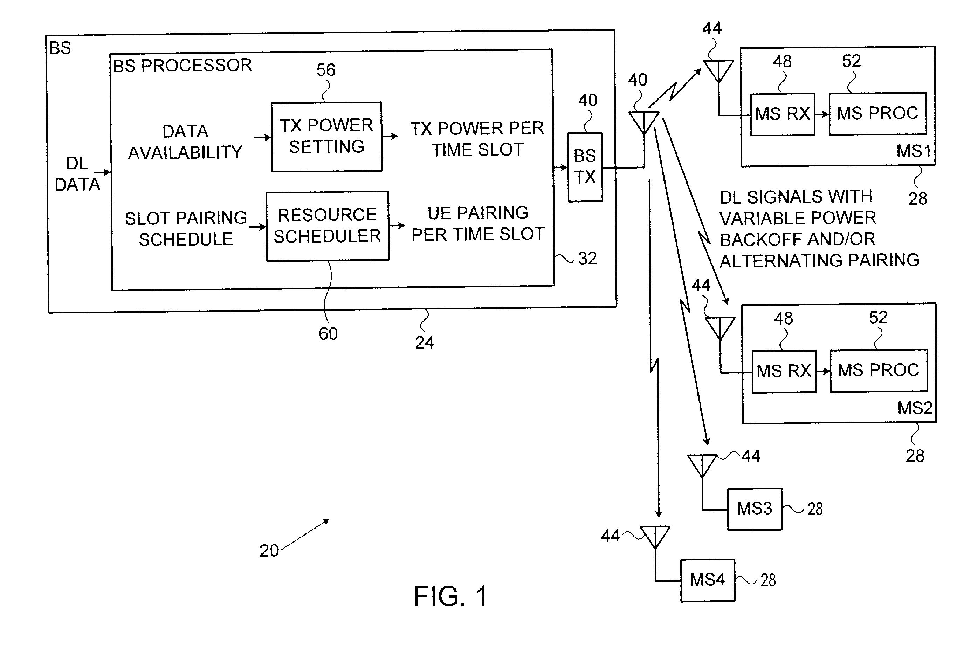

Fig. 1 is a block diagram that schematically illustrates a wireless communication network 20, in accordance with an embodiment that is described herein. Network 20 comprises a base Station (BS) 24, which communicates with mobile communication terminals 28, also referred to as Mobile Stations (MSs). In the present example, network 20 comprises a GERAN network that supports MUROS or VAMOS (the terms MUROS and VAMOS are used interchangeably herein). The disclosed techniques, however, are not limited to VAMOS, and are applicable to networks that use any other suitable Time-Division Multiplexing (TDM) based communication protocol.

In an embodiment, MSs 28 comprise, for example, cellular phones, communication-enabled mobile computing devices, cellular adapters for mobile computing devices or any other suitable type of communication terminal. Although Fig. 1 shows a single BS and four MSs for the sake of clarity, real-life networks typically comprise multiple BSs and multiple MSs.

BS 24 comprises a BS processor 32, which manages the BS operation. In particular, the BS processor controls the power level at which the BS transmits to the different MSs, and the assignment of MSs to communication channels, using methods that are described in detail below. BS processor 32 may perform such functionalities (e.g., channel assignment and control of transmission power) using separate units within the BS processor. Alternatively, a single processing unit may perform any suitable subset of these functions, or even all functions. The BS processor accepts downlink data for transmission to the MSs, and produces downlink signals for transmission. The downlink signals are provided to a BS transmitter (BS TX) 36, which transmits the signals using a BS antenna 40 to MSs 28.

In each MS 28, the downlink signals are received by a MS receiver (MS RX) 48 via a MS antenna 44. A MS processor 52 reproduces the downlink data that was transmitted to the MS from the BS. (The internal MS structure is shown in Fig. 1 only for the MSs denoted MS1 and MS2, for the sake of clarity. The other MSs typically have a similar internal structure.)

In some embodiments, BS processor 32 comprises a transmit (TX) power setting unit 56, which sets the transmit power of the BS on the different VAMOS sub-channels. In some embodiments, BS processor 32 comprises a resource scheduler 60, which assigns MSs to VAMOS communication channels. Example techniques for transmit power setting and for channel assignment are described in detail below.

The system, BS and MS configurations shown in Fig. 1 are simplified example configurations, which are depicted solely for the sake of conceptual clarity. In alternative embodiments, any other suitable system BS and/or MS configuration can be used. System, BS and MS elements that are not necessary for understanding the disclosed techniques have been omitted from the figure for the sake of clarity. For example, since the disclosed techniques are mainly concerned with downlink transmission, BS and MS elements that are related to the uplink (e.g., a MS transmitter and a BS receiver) have been omitted from the figure.

The different elements of BS 24 and MS 28, including processor 32 (and in particular units 56 and 60), transmitter 36, receiver 48 and/or processor 52, may be implemented using dedicated hardware, such as using one or more Application-Specific Integrated Circuits (ASICs), Field-Programmable Gate Arrays (FPGAs) or other hardware devices. Alternatively, some BS and/or MS elements may be implemented using software executing on general-purpose hardware, or using a combination of hardware and software elements. In some embodiments, processor 32 and/or processor 52 comprise programmable processors that are programmed in software to carry out the functions described herein, although they too may be implemented on dedicated hardware. The software may be downloaded to the processors in electronic form, over a network, for example, or it may, alternatively or additionally, be provided and/or stored on non-transitory tangible media, such as magnetic, optical or electronic memory. In some embodiments, some or all of the elements of MS 28 may be fabricated in a chip-set.

In an embodiment, BS 24 transmits the downlink signals using a Time-Division Multiplexing (TDM) communication protocol such as a 3GPP GERAN protocol. In accordance with the protocol, multiple communication channels (also referred to as resources) are interleaved with one another in the time domain. In the example embodiments described herein, BS 24 transmits one or more Radio Frequency (RF) carriers (also denoted RF channels), which in some embodiments hop in frequency. On each RF carrier, the BS transmits a sequence of Time-Division Multiple Access (TDMA) frames, each frame comprising eight time slots. The sequence of time slots comprising a given time slot in each TDMA frame on a given RF carrier (e.g., the second time slot in each TDMA frame) is regarded as a communication channel or resource. In alternative embodiments, any other suitable arrangement of traffic channels can also be used.

When using VAMOS, resource scheduler 60 in BS 24 assigns a given communication channel to up to four MSs. When using full-rate speech coding, for example, a given communication channel is assigned to one or two MSs. When using half-rate speech coding, up to four MSs can be assigned the same communication channel. Hybrid scenarios that mix full-rate and half-rate speech coding are also feasible.

On a given time slot, the BS uses one of two possible modulation schemes, depending on whether it transmits to a single MS or to two MSs simultaneously. When transmitting to a single MS on a given time slot, the BS transmits to the single MS using a modulation scheme that modulates one bit per symbol, such as Gaussian Minimum Shift Keying (GMSK). When transmitting to two MSs simultaneously on a given time slot, the BS transmits to the two MSs using a modulation scheme that modulates two bits per symbol. Typically, this modulation scheme comprises a quadrature modulation scheme, which modulates the traffic for the two MSs on two respective mutually-orthogonal quadrature sub-channels.

The two-bits-per-symbol modulation scheme may comprise, for example, Quadrature Phase Shift Keying (QPSK). In another embodiment, the BS uses a variant of QPSK, in which the two quadrature sub-channels are given different gains. This variant is sometimes referred to as α-QPSK, wherein α denotes the ratio between the gains of the two quadrature sub-channels. The description that follows assumes that the BS transmits using GMSK when transmitting to a single MS, and using α-QPSK when transmitting to two MSs simultaneously.

In some practical cases, a certain communication channel (resource) is defined as a VAMOS channel that is able to support simultaneous transmission to two MSs, but the BS nevertheless transmits only to a single MS during at least some of the time slots of this channel. For example, one or both MSs assigned to this channel may operate in a Discontinuous Transmission (DTX) mode in order to reduce interference to other BSs or MSs. In the DTX mode, the BS transmits in the time slots of the channel only if there is active speech to be transmitted. In GERAN systems, for example, when using full-rate speech coding, only twelve TDMA frames out of every 104 TDMA frames would contain transmitted time slots if the BS has no active speech to transmit. For half-rate speech coding, eight TDMA frames out of every 104 TDMA frames would contain transmitted time slots if the BS has no active speech to transmit. (One half-rate channel uses only fifty-two out of the 104 TDMA frames, while the other fifty-two TDMA frames are used by the other half-rate channel.) In a continuous transmission mode, by contrast, the BS transmits in every time slot regardless of speech activity.

When one or both MSs that are assigned to a certain channel use DTX, some time slots of that channel will contain transmission for only one of the MSs. The likelihood and distribution of such time slots depend on the speech activity statistics of the MS users. In an example scenario, active speech is present for a given MS during approximately 50% of the time. Speech activity and inactivity periods alternate at a rate that is on the order of seconds. In other scenarios, time slots of a certain VAMOS communication channel may carry transmissions to only one MS because the second MS has not yet initiated communication (e.g., handed-off) to this channel. Further alternatively, a VAMOS communication channel may temporarily carry transmission to only a single MS for any other reason.

When transmitting to a single MS on a given time slot, the BS reverts to GMSK modulation, as opposed to α-QPSK modulation that is used for simultaneous transmission to two MSs. This scenario may occur, for example, during intermittent DTX periods or when there is no other MS currently assigned to the time slot. In the description that follows, time slots in which the BS transmits to a single MS using GMSK are referred to as GMSK time slots, and time slots in which the BS transmits to a single MS using α-QPSK are referred to as α-QPSK time slots. Both the GMSK time slots and the α-QPSK time slots belong to the same VAMOS communication channel.

The performance of GMSK modulation is considerably higher than the performance of α-QPSK modulation, in terms of the Signal-to-Noise (S/N) or Signal-to-Interference (C/I) ratio that is required to achieve a certain error probability. Therefore, unless accounted for, the GMSK time slots enjoy considerably better conditions than the α-QPSK time slots. In some embodiments, BS 24 uses the improved conditions of the GMSK time slots to improve the overall system performance.

In some embodiments, TX power setting unit 56 in BS 24 sets the transmit power that is used for transmission to a given MS to different power levels, depending on whether the same time slot is also used simultaneously for transmitting to another MS. In a typical embodiment, unit 56 sets a first power level for transmitting to the given MS if the time slot in question is an α-QPSK slot (i.e., if the same time slot is also used for transmitting to another MS). If the time slot is a GMSK slot (i.e., if transmission on this time slot is only to the given MS), unit 56 sets a second power level that is lower than the first power level.

The reduction in power level in the GMSK time slots reduces the interference caused by the BS to neighboring cells, and therefore improves the overall system performance. Since GMSK modulation is considerably more resilient to noise and interference than α-QPSK modulation, suitable reduction in power level causes little or no degradation in reception of the GMSK signal at the MS.

When comparing the transmit power levels used in the GMSK slots and the α-QPSK slots, the comparison should not consider the total power of the α-QPSK, but only the power of the quadrature sub-channel that is used for transmitting to the given MS. When referring to simultaneous transmission to two MSs on a VAMOS channel, the term "power level that is used for transmission to a MS as part of the simultaneous transmission" refers only to the power level on the quadrature sub-channel that is used for transmission to that MS, and not to the overall transmit power on the VAMOS channel. In an α-QPSK slot, the power level on a given quadrature sub-channel can be defined as the power level of the projection of the α-QPSK signal on that sub-channel. When switching between α-QPSK transmission and GMSK transmission (e.g., when one MS goes in and out of DTX), the total transmit power on the channel changes inherently because one of the quadrature sub-channels is switched on and off. This sort of change is not considered a change in the transmit power level toward the other MS.

For a given MS, unit 56 can set the first power level (used in GMSK slots) and the second power level (used in α-QPSK slots) to any suitable values and according to any suitable criteria. In some embodiments, unit 56 sets both power levels to values that meet a target error rate (e.g., Frame Error Rate - FER). In an example embodiment, the target FER at the MS is defined as 1%, for both GMSK and α-QPSK transmissions. In this embodiment, unit 56 sets the transmit power level during the α-QPSK slots such that the corresponding quadrature sub-channel is received by the MS at a FER that meets the target FER. During GMSK time slots that are used for transmitting to this MS, unit 56 reduces the transmit power level to a value that meets the target FER for GMSK.

When setting the first and second power levels to meet the same target FER, the difference between the two power levels depends on the value of α, i.e., on the power ratio between the two quadrature sub-channels of the α-QPSK signal. For α=-8dB, for example, the transmit power level used for transmitting to the MS having the weaker quadrature sub-channel can be reduced by approximately 4dB during the GMSK slots, while still meeting the 1% target FER. This 4dB reduction in power enables considerable reduction in the interference to neighboring cells.

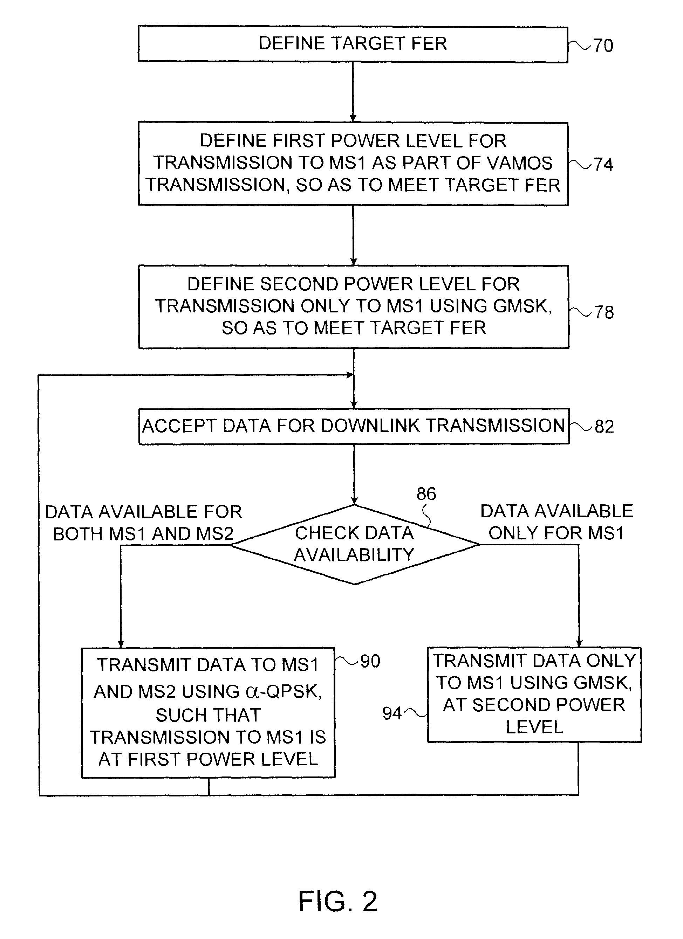

Fig. 2 is a flow chart that schematically illustrates a method for downlink transmission over a VAMOS channel, in accordance with an embodiment that is described herein. The method description refers to a scenario in which BS 24 has assigned two MSs denoted MS1 and MS2 to a certain VAMOS channel.

The method begins with unit 56 in BS 24 defining (or accepting a definition of) a target FER, at a target FER definition operation 70. At a first power level definition operation 74, unit 56 defines a first power level for use in transmission to MS1 as part of simultaneous VAMOS transmission to MS1 and MS2 (e.g., in α-QPSK slots). At a second power level definition operation 78, unit 56 defines a second power level for use in transmission only to MS1 (e.g., in GMSK slots). Both transmit power levels are chosen so as to meet the target FER defined at operation 70 above.

At a certain point in time, BS processor 32 accepts downlink data for transmission, at an input operation 82. At least some of the downlink data is to be transmitted to MS1. Possibly, some of the downlink data is to be transmitted to MS2. In and embodiment, when preparing to transmit the downlink data, BS processor 32 checks whether data is to be transmitted only to MS1, or to both MS1 and MS2, at a checking operation 86. Data may be available only for MS1, for example, when MS2 operates in DTX mode and the BS currently has no active speech to transmit to MS2.

If the BS processor concludes that data is available for transmission to both MS1 and MS2, the BS transmits to MS1 and MS2 simultaneously using α-QPSK, at a simultaneous transmission operation 90. For the simultaneous transmission, unit 56 sets the transmit power level of the quadrature sub-channel that is used for transmitting to MS1 to the first power level defined at operation 74. The method loops back to operation 82 above in which the BS processor accepts additional downlink data for transmission.

If, on the other hand, the BS processor concludes that data is to be transmitted only to MS1, the BS transmits only to MS1 using GMSK, at a GMSK transmission operation 94. For this transmission, unit 56 sets the transmit power level of the GMSK signal that is used for transmitting to MS1 to the second power level defined at operation 78. The method then loops back to operation 82 above.

In some embodiments that are described herein, BS 24 allocates a given VAMOS channel (resource) for up to four half-rate MSs. The VAMOS channel comprises a sequence of time slots (typically the k^{th} time slot in each TDMA frame on a given RF carrier). As with full-rate MSs, each time slot serves up to two MSs. When using half-rate speech coding, however, each MS uses on average only one time slot every two TDMA frames. In some cases, a given time slot on the VAMOS channel carries transmission only to a single MS (e.g., when the other MS assigned to this time slot operates in DTX and has no active speech to receive). When a given time slot carries transmission only to a single MS, the BS transmits during this time slot using GMSK instead of α-QPSK.

As explained above, the performance of GMSK modulation typically is considerably better than the performance of α-QPSK modulation. Therefore, a MS that receives GMSK signals (because the BS does not transmit to any other MS on the same time slot) will enjoy considerably better conditions than a MS that receives a quadrature sub-channel of a α-QPSK signal.

When assigning four half-rate MSs to a VAMOS channel, the BS divides the four MSs into pairs, and transmits to each pair simultaneously over a subset of the time slots of the VAMOS channel. The BS may divide the MSs into pairs according to various criteria. Although it is possible in principle to define a fixed division of the MSs into pairs, this sort of division is likely to cause only selected MSs to enjoy the superior conditions of GMSK reception.

Consider, for example, four half-rate MSs denoted MS1...MS4 that are assigned a certain VAMOS channel. Assume, for example, that MS1 operates in a DTX mode, and that MS2...MS4 operate in a continuous transmission mode. Assume also that the BS pairs MS1 constantly with MS2 and MS3 constantly with MS4. In this scenario, whenever MS1 has no active speech to receive, the BS transmits to MS2 using GMSK. MS3 and MS4, on the other hand, always receive α-QPSK signals and never receive GMSK signals, since they are constantly paired together. Thus, the benefit of having MS1 operate in DTX is enjoyed only by MS2 and never by MS3 or MS4.

In some embodiments that are described herein, BS 24 changes the division of MS1...MS4 into pairs from time to time. As a result, the benefit of having one or more MSs operate in DTX is distributed among the MSs. In some embodiments, BS processor 32 predefines (or accepts a definition of) a slot pairing schedule, which specifies the alternation in pairing MSs over time. In an example embodiment, the slot pairing schedule spans multiple TDMA frames (e.g., one or more traffic multi-frames, each comprising twenty-six TDMA frames). For each TDMA frame, the predefined schedule defines which of the four MSs are paired together. The schedule defines alternating pairing. In other words, in a certain subset of the time slots of the schedule MS1 is paired with MS2, and in another subset of the time slots in the schedule MS1 is paired with MS3. When using this sort of pairing schedule, the improved conditions that are caused by MS1 operating in DTX are enjoyed by both MS2 and MS3.

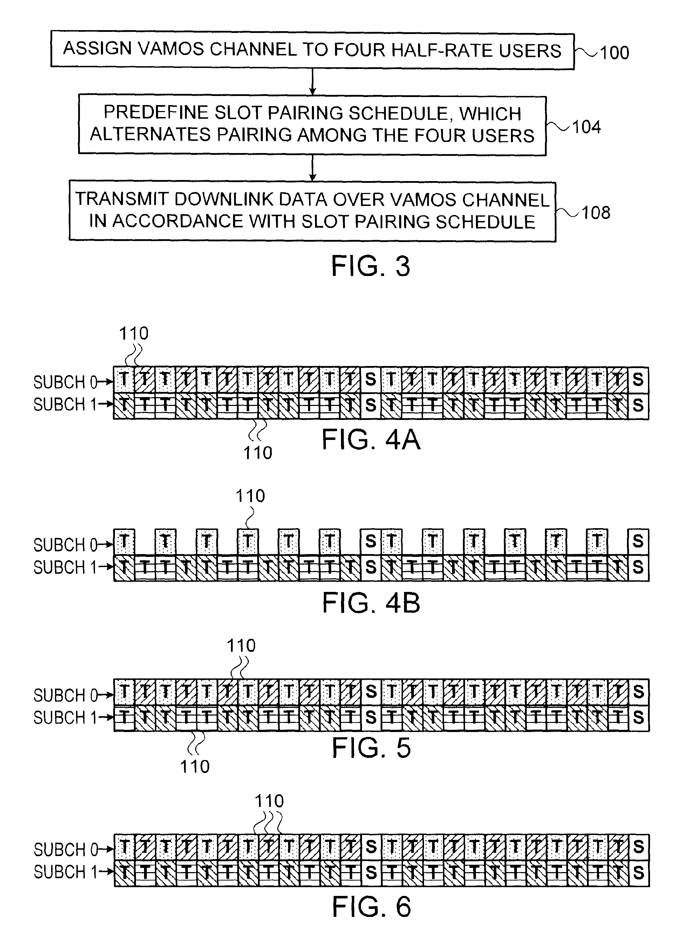

Fig. 3 is a flow chart that schematically illustrates a method for downlink transmission over a VAMOS channel, in accordance with an embodiment that is described herein. The method begins with BS 24 assigning a certain VAMOS channel to at least three MSs that use half-rate speech coding, at an assignment operation 100. In the present example, the BS assigns the VAMOS channel to four MSs denoted MS1...MS4.

Resource scheduler 60 (Fig. 1) in the BS predefines (or accepts a definition of) a slot pairing schedule for the given VAMOS channel, at a schedule definition operation 104. The slot pairing schedule defines the pairing of MS1...MS4 on the different time slots of the VAMOS channel. The pairing schedule alternates over time, such that a given MS (e.g., MS1 in the present example) is paired with different MSs at different times. When using such alternating pairing, if a certain MS operates in DTX, the performance benefit of being paired with this MS is distributed among the other three MSs. Several examples of slot pairing schedules are shown in Figs. 4A, 5 and 6 below. BS 24 then transmits downlink data to MS1...MS4 over the VAMOS channel in accordance with the predefined slot pairing schedule, at a transmission operation 108.

Although the description above refers to performance benefits caused by a certain MS operating in DTX, the alternating pairing techniques described herein are useful in other circumstances, as well. For example, consider a scenario in which the BS allocates only three MSs using half-rate speech coding in VAMOS mode on the channel. In such a scenario, two MSs are paired together (and therefore receive α-QPSK signals from the BS) while the third MS is not paired (and therefore receives GMSK signals). In some embodiments, the BS assigns time slots to the three MSs according to the predefined pairing schedules described herein, in which the pairing alternates over time. When using this technique, at least some of the MSs receive GMSK signals during some of the time slots and α-QPSK signals during some of the time slots. In these embodiments too, the performance benefit resulting from GMSK transmission is distributed among the three MSs rather than enjoyed by only one of them.

Fig. 4A is a diagram that schematically illustrates an example slot pairing schedule, in accordance with an embodiment that is described herein. The schedule assigns time slots 110 on a given VAMOS channel for downlink transmission to MS1...MS4, such that the pairing of MSs alternates over time. The example slot pairing schedule of Fig. 4A spans one GERAN traffic multi-frame, i.e., twenty-six TDMA frames (120mS). The BS typically applies the schedule periodically in subsequent traffic multi-frames.

Two of the twenty-six TDMA frames (the 13^{th} and 26^{th} TDMA frames in the multi-frame) comprise a Slow Associated Control Channel (SACCH), and therefore do not carry speech data transmissions to the MSs. These TDMA frames are marked "S" in the figure. For the remaining twenty-four TDMA frames in the traffic multi-frame, the schedule comprises respective twenty-four time slots 110 that carry transmissions to MS1...MS4, one transmission in each TDMA frame. These time slots are marked "T" in the figure.

The top row of the diagram shows the MS assignment to one of the quadrature sub-channels (denoted "SUBCH0"). The bottom row of the diagram shows the MS assignment to the other quadrature sub-channel (denoted "SUBCH1"). The four MSs are shown using different shading patterns. As can be seen in the figure, the pairing of MSs alternates over time. For example, the MS that is represented by a dotted pattern is paired with one MS (represented by a diagonal pattern) during six time slots 110, and with a different MS (represented by a horizontal pattern) during other six time slots 110 in the multi-frame.

Fig. 4B is a diagram that schematically illustrates the slot pairing schedule of Fig. 4A when transmission to one of the MSs uses DTX, in accordance with an embodiment that is described herein. In the present example, the BS transmits to only three of the four MSs that are allocated to the VAMOS channel in question. Therefore, half of time slots 110 carry simultaneous α-QPSK signals addressed to two MSs, and half of the time slots carry GMSK signals addressed to a single MS. This scenario occurs, for example, when one MS operates in DTX and the BS has no active speech to transmit to it during this multi-frame. This scenario also occurs when only three MSs are allocated to the physical channel, either temporarily or permanently.

As can be seen in the figure, because of the alternating pairing defined by the pairing schedule, BS 24 transmits GMSK signals to both MSs of SUBCH1 with equal likelihood. Thus, the performance benefit of receiving GMSK signals (as opposed to α-QPSK signals) is distributed between the two MSs of SUBCH1.

The slot pairing schedule of Figs. 4A and 4B can also be viewed in a different manner: The assignment of MSs to time slots on SUBCH0 alternates in every TDMA frame. On SUBCH1, however, the time slot assignment alternates only once every two TDMA frames. In other words, the two quadrature sub-channels alternate the assignment of MSs to time slots with different cycles. This difference in cycles between the two sub-channels causes the pairing of MSs to change over time. Note that since in SUBCH0 the assignment of MSs to time slots alternates in every TDMA frame, SUBCH0 can be used to communicate with legacy MSs that do not support the scheduling patterns described herein.

Figs. 5 and 6 are diagrams that schematically illustrate slot pairing schedules, in accordance with alternative embodiments that are described herein. In particular, Fig. 6 shows a pairing schedule in which the pairing alternates at the boundary of the 13^{th} TDMA frame, i.e., in the middle of the traffic multi-frame. During each half of the multi-frame, the pairing is fixed.

The pairing schedules of Figs. 4A, 4B, 5 and 6 are depicted purely by way of example. In alternative embodiments, any other suitable pairing schedule can also be used. For example, in the examples above the pairing schedule is synchronized to the traffic multi-frame and does not change from one multi-frame to another. This configuration simplifies the implementation in the BS and in the MS. Alternatively, however, schedules that change from one traffic multi-frame to another are also contemplated. Typically, the disclosed pairing schedules have no effect on codec selection (selection between half-rate and full-rate speech coding) or on allocation of full-rate MSs. As noted above, legacy MSs that do not support the alternate-pairing schedules described herein can be assigned to SUBCH0. Nevertheless, such legacy MSs also enjoy the performance benefits provided by the alternating pairing scheme.

Although the embodiments described herein mainly address VAMOS schemes that transmit to one or two MSs in each time slot, the methods and systems described herein can also be used, *mutatis mutandis,* in transmission schemes that transmit to three or more MSs per time slot using higher-order modulation. For example, the scheme of Fig. 2 above can be generalized to high order modulation by applying different power levels for transmission to a given MS as a function of the number of MSs being served by the same physical channel. In particular, the BS transmits to a single MS at a lower power level than the power level used for transmitting to that MS simultaneously with transmissions to other MSs on the same physical channel, using any high-order modulation. Thus, when using the disclosed techniques, transmit power for transmission to a given MS can be graduated so that the transmit power is increased as a function of the number of MSs to which simultaneous transmissions are made over a shared channel.

It is noted that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art.

## Claims

1. A method, comprising:
assigning a communication channel for simultaneous transmission to at least first and second mobile communication terminals (28) using a Time-Division Multiplexing (TDM) communication protocol;
upon determining that data is to be transmitted over the communication channel to both the first and the second mobile communication terminals, transmitting the data at a first power level that is defined for transmission to the first mobile communication terminal as part of the simultaneous transmission; and
upon determining that the data is to be transmitted over the communication channel only to the first mobile communication terminal, transmitting the data at a second power level that is defined for transmission only to the first mobile communication terminal and is lower than the first power level.

2. The method according to claim 1, comprising predefining the first and second power levels.

3. The method according to claim 2, wherein assigning the communication channel comprises assigning first and second orthogonal quadrature sub-channels for transmission to the first and second mobile communication terminals, respectively, and wherein predefining the first power level comprises setting a projection of the simultaneous transmission on the first quadrature sub-channel to have the first power level.

4. The method according to claim 3, wherein transmitting the data at the first power level comprises modulating the data for the first and the second mobile communication terminals onto respective first and second quadrature components of a Quadrature Phase Shift Keying (QPSK) signal, and wherein transmitting the data at the second power level comprises modulating the data onto the first quadrature sub-channel using Gaussian Minimum Shift Keying (GMSK).

5. The method according to claim 2, wherein predefining the first power level comprises setting the first power level so as to meet a target error rate at the first mobile communication terminal during the simultaneous transmission, and wherein predefining the second power level comprises setting the second power level so as to meet the target error rate at the first mobile communication terminal during transmission only to the first mobile communication terminal.

6. The method according to any of claims 1-5, wherein transmission to the second mobile communication terminal is carried out in a Discontinuous Transmission (DTX) mode, and wherein determining that the data is to be transmitted only to the first mobile communication terminal comprises determining a time period of the DTX mode in which there is no active speech for transmission to the second mobile communication terminal.

7. The method according to any of claims 1-5, wherein determining that the data is to be transmitted only to the first mobile communication terminal comprises determining that the communication channel is currently allocated only to the first mobile communication terminal.

8. Apparatus, comprising:
a transmitter (40), which is,configured to transmit signals using a Time-Division Multiplexing (TDM) communication protocol to at least first and second mobile communication terminals (28);
a resource scheduler (60), which is configured to assign a communication channel for simultaneous transmission to at least the first and second mobile communication terminals; and
a controller (32), which is configured to:
cause the transmitter to transmit data at a first power level that is defined for transmission to the first mobile communication terminal as part of the simultaneous transmission, when the data is to be transmitted over the communication channel to both the first and the second mobile communication terminals, and,
to cause the transmitter to transmit the data at a second power level, which is defined for transmission only to the first mobile communication terminal and is lower than the first power level, when the data is to be transmitted over the communication channel only to the first mobile communication terminal.

9. The apparatus according to claim 8, wherein the resource scheduler is configured to assign first and second orthogonal quadrature sub-channels for transmission to the first and second mobile communication terminals, respectively, and wherein the controller is configured to predefine the first power level by setting a projection of the simultaneous transmission on the first quadrature sub-channel to have the first power level.

10. The apparatus according to claim 9, wherein controller is configured to transmit the data at the first power level by modulating the data for the first and the second mobile communication terminals onto respective first and second quadrature components of a Quadrature Phase Shift Keying (QPSK) signal, and to transmit the data at the second power level by modulating the data onto the first quadrature sub-channel using Gaussian Minimum Shift Keying (GMSK).

11. The apparatus according to any of claims 8-10, wherein the controller is configured to set the first power level so as to meet a target error rate at the first mobile communication terminal during the simultaneous transmission, and to set the second power level so as to meet the target error rate at the first mobile communication terminal during transmission only to the first mobile communication terminal.

12. The apparatus according to any of claims 8-10, wherein transmission to the second mobile communication terminal is carried out in a Discontinuous Transmission (DTX) mode, and wherein the controller is configured to determine that the data is to be transmitted only to the first mobile communication terminal by determining a time period of the DTX mode in which there is currently no active speech for transmission to the second mobile communication terminal.

13. The apparatus according to any of claims 8-10, wherein the controller is configured to determine that the data is to be transmitted only to the first mobile communication terminal by determining that the communication channel is currently allocated only to the first mobile communication terminal.

14. A method, comprising:
allocating a communication channel, comprising a sequence of time slots (110), for transmissions to at least first, second and third mobile communication terminals (28), such that each time slot carries a respective transmission addressed to up to two of the mobile communication terminals;
predefining a slot pairing schedule, which assigns a first subset of the time slots for the transmissions to the first and second mobile communication terminals and assigns a second subset of the time slots for the transmissions to the first and third mobile communication terminals; and
transmitting signals to at least the first, second and third mobile communication terminals in accordance with the predefined slot pairing schedule.

15. Apparatus, comprising:
a transmitter (40), which is configured to transmit signals to at least first, second and third mobile communication terminals (28); and
a processor (32), which is configured to allocate a communication channel, comprising a sequence of time slots (110), for transmissions to at least the first, second and third mobile communication terminals, such that each time slot carries a respective transmission addressed to up to two of the mobile communication terminals, to predefine a slot pairing schedule, which assigns a first subset of the time slots for the transmissions to the first and second mobile communication terminals, and which assigns a second subset of the time slots for the transmissions to the first and third mobile communication terminals, and to cause the transmitter to transmit signals to at least the first, second and third mobile communication terminals in accordance with the predefined slot pairing schedule.
